# EUROPEAN PATENT SPECIFICATION

(11) **EP 0 474 248 B1**
(45) Date of publication and mention of the grant of the patent: **15.11.1995**
(21) Application number: 91115119.9
(22) Date of filing: 06.09.1991
(51) Int. Cl.: B29C 44/08, B29C 41/04, C08J 9/34, C08J 9/02

(54) **Process for the manufacture of shaped bodies with integrated polyurethane skin, and shaped bodies obtained thereby**
Verfahren zur Herstellung von mit einer integralen Polyurethan Aussenschicht versehenen Formkörpern und derartig hergestellte Formkörper
Procédé pour la fabrication d'articles comprenant une chouche externe intégrale de polyuréthane et articles obtenus par ce procédé

(30) Priority: 07.09.1990 IT 2140390
(43) Date of publication of application: 11.03.1992
(73) Proprietor: ENICHEM S.p.A., 20124 Milano (IT)
(72) Inventor: Bianchin, Eugenio, I-31100 Treviso (IT); Andreola, Piero, I-30122 Venice (IT); Torre, Francesco, I-30125 Venice (IT)
(74) Representative: Barz, Peter, Dr.

(56) References cited:
- DE-A- 3 932 307
- FR-A- 1 514 185
- FR-A- 1 523 836
- NL-A- 7 304 815
- US-A- 4 855 096
- US-A- 4 952 350

## Description

The present invention relates to a process for the manufacture of shaped bodies (articles) with integrated polyurethane skin, and to the shaped bodies (articles) obtained thereby.

More particularly, the present invention relates to a process for the manufacture of shaped bodies of foamed polyurethane with an integrated skin of the same type, which process can be carried out without using chlorofluoroalkane foaming agents.

The term "shaped bodies", as used in the present description and in the appended claims, denotes manufactured articles which are made of polymers, preferably foamed polymers, and are coated with a thin layer of solid (compact) polyurethane. Examples of such articles are components for car interiors, such as headrests, tunnel covers, dashboards, inner side panels for doors, steering wheel covers, ball grips for gearbox levers etc. and saddles for cycles and motor-cycles, seats for furnishing or transportation means, arm rests for chairs and arm-chairs, cases for electrical household appliances or electronic apparatus, boxes for electrical components, window frames, components for furnishing, etc.

The technique of producing manufactured articles of foamed polyurethane with integrated skin is well-known and firmly established in this field.

According to said technique, a moulding blend composed of polyurethane reactants admixed with a foaming agent, polymerization catalyst, and further additives such as cell regulators, stabilizers, etc. is charged to a mould kept at a predetermined temperature.

The foaming agent is essentially composed of chlorofluoroalkanes (chlorofluorocarbons, CFC) having an evaporation/condensation temperature of from 20 to 60°C.

During the polymerization, the chlorofluorocarbons evaporate due to the heat of reaction evolved and act as foaming agents for the polyurethane resin. When the latter comes into contact with the "cold" walls of the mould, the chlorofluorocarbons condense owing to the effects of temperature and the compression exerted by the foamed resin. Therefore, that portion of the polyurethane resin which comes into contact with the walls of the mould forms a compact layer.

The manufactured article which is discharged from the mould is hence constituted by an internal mass with cellular structure coated, with complete adhesion, with an enbloc skin with compact structure, the thickness of which does not exceed a few millimetres.

Although there are no technical problems the method described above is characterized by the drawback that as foaming agent a gas has to be used which belongs to the class of chlorofluoroalkanes which, as is well-known by now, exert a noxious effect on the ozone layer of the stratosphere.

The recent international conventions which aim at the progressive reduction of chlorofluorocarbon production have increased the incentive to develop techniques which make it possible to replace said CFCs by products which are less harmful to the environment.

There has now been found a process which makes it possible to manufacture articles of (preferably) foamed polymers with integrated skin and which is not based on the compulsory use of CFCs as foaming agents.

Accordingly, the present invention provides a process for the manufacture of shaped bodies with integrated polyurethane skin, which process comprises the steps of
(a) charging a closed mould which is suitable for rotational moulding with a first premixed polymerization-reactive polyurethane system;
(b) causing the mould to rotate, according to the rotational moulding technology, for a period of time which is sufficient to form a thin layer of partially polymerized material on the inner surface of said mould; and
(c) discontinuation of the rotation and charging the mould with a polymerization-reactive material which fills the inner mould cavity.

Rotational moulding is a well-known technique and described, e.g., by E. Zuckmantel in "Kunststoffe", vol. 63, October 1973, page 721.

According to a preferred embodiment of the process according to the present invention, the thin layer formed during the rotation of the mould has a thickness of not more and preferably less than 10 mm. Most preferably said thickness is within the range of from 0.3 to 3.5 mm.

The uniformity or the layer depends on the rotational speed of the axes of the rotor on which the mould is mounted and on the rheology of the polyurethane system which constitutes said layer. In order to be able to achieve thin, uniform layers, it is preferable to operate with a rotational speed of the rotor axes of from 10 to 50 revolutions per minute, and with a reactive polyurethane system having an initial viscosity of not more than 5,000 mPa.s, preferably of from 50 to 1,000 mPa.s.

If necessary, the viscosity of the polyurethane system can be controlled by using viscosity depressants such as, e.g., perchloroethylene, dibutyl adipate, cumene, etc.

After a relatively short rotation time, typically from 30 to 300 seconds, during which the components of the layer begin to react in order to yield a partially polymerized urethane polymer, the rotation of the mould is discontinued and the mould cavity is filled with a polymerization-reactive material.

The polymerization-reactive material used to fill the mould cavity is preferably constituted by a (second) premixed polymerization-reactive polyurethane system which can be converted into a cellular foam, as disclosed hereinunder, or by other materials, such as, e.g., phenolic resins, epoxy resins, poly(vinyl chloride) and poly(methyl methacrylate) based plastisols, etc., optionally admixed with foaming agents.

A filling material resulting in non-foamed polyurethane can be used as well.

In the process according to the present invention, any filling methods can be used. For example, the filling material can be injected into the closed mould, or it can be poured into the mould while the latter is open. According to still another method the preshaped skin shell can be removed from the mould, to be subsequently filled with the polymerization-reactive material outside of said mould.

In order to achieve a particularly satisfactory adhesion between the inner component and the surface component, thus obtaining an as perfect as possible "integrated skin" shaped body, the feeding of the second polymerization-reactive system (step (c)) may be effected only when the polymerization of the polyurethane layer has proceeded to such an extent that on the one hand said layer already shows a dimensional stability of its own and, on the other hand, still provides chemical groups and/or physical characteristics which allow a favourable bonding of the second material thereto.

The polyurethane system for the thin layer essentially comprises a polymerization-reactive mixture containing at least one organic polyisocyanate, at least one compound containing active terminal hydrogen atoms, and a catalytic system for the polymerization reaction.

The components of the polyurethane system capable of being converted into a cellular foam, which is an example of an active filling material, can be the same as or different from those of the thin skin layer and furthermore comprise a foaming agent, preferably carbon dioxide generated in situ during the polymerization through the reaction of the isocyanate groups with water.

In the process according to the present invention, the amount of water which can be used in combination with the compound containing terminal active hydrogen atoms (of the polyurethane system capable of being converted into a cellular foam) depends on the desired degree of foaming. Said amount is wellknown to those skilled in this field, and usually ranges from 0.5 to 5 parts by weight per 100 parts by weight of the compound(s) with terminal active hydrogen atoms.

However, this method of introducing the foaming gas into the polymerization mass should not be understood as being limitative, in that other gases and other techniques may be used as well, such as, e.g., bubbling air, CO₂, nitrogen, etc., throughout the reaction mass by injecting these gases from the outside, under pressure. All these methods fall within the scope of the present invention.

Inasmuch as according to the process of the present invention the individual reactive components of the thin layer can also be different from those which constitute the filling polyurethane system, finished manufactured articles can be produced which comprise an inner, optionally foamed mass obtained from inexpensive starting materials, which mass is coated with a thin, integrated skin obtained from more valuable (expensive) reactants.

Any organic polyisocyanate capable of yielding polyurethane resins and/or foams can be used in the practice of the present invention, even if aliphatic, cycloaliphatic and aromatic polyisocyanates and their corresponding alkyl-substituted derivatives are preferred.

In particular, low molecular-weight diisocyanates having the general formula (I):

OCN-R-NCO (I)

wherein:
- R: represents an optionally alkyl (e.g. C₁₋₄ alkyl) substituted aliphatic, cycloaliphatic or aromatic radical of from 1 to 30 (preferably 2 to 20) carbon atoms,
can be used to advantage.

Specific examples thereof are 2,2,4-trimethylhexamethylene diisocyanate, ethylidene diisocyanate, butylene diisocyanate, hexamethylene diisocyanate, cyclohexylene-1,4-diisocyanate, cyclohexylene-1,2-diisocyanate, dichlorohexamethylene diisocyanate, xylylene diisocyanate, meta- and/or para-phenylene diisocyanate, 2,4-toluene diisocyanate, either alone or in admixture with its isomer 2,6-toluene diisocyanate, 4,4'-diphenylmethane diisocyanate, optionally in admixture with its 2,4'-isomer, 4,4'-dicyclohexylmethane diisocyanate and 1-isocyanato-3-isocyanato-methyl-3,3,5-trimethylcyclohexane (isophorone diisocyanate).

The preferred diisocyanates of formula (I) are 2,4-toluene diisocyanate (TDI), either alone or in admixture with preferably at least 20% by weight of the 2,6-isomer, and 4,4'-diphenylmethane diisocyanate (MDI), either alone or in admixture with preferably at least 5% by weight of the 2,4'-isomer.

Undistilled, crude toluene diisocyanate, i.e., a partially purified toluene diisocyanate drawn from whichever tray of a distillation tower can also be used.

As alternative starting materials, medium- and/or high-molecular-weight polyisocyanates with various degrees of condensation, as obtained form the phosgenation of aniline-formaldehyde condensates, can be used. These products are composed of mixtures of polymethylene-polyphenyl-polyisocyanates having the general formula (II): 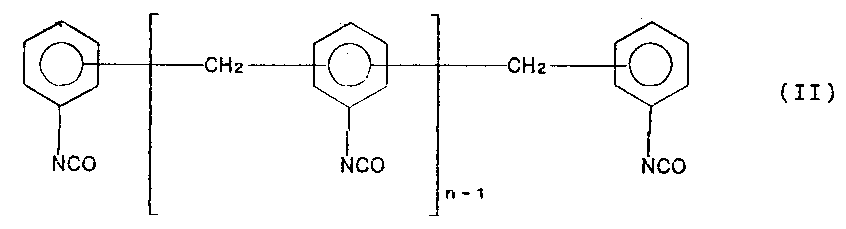
wherein n is an integer equal to or higher than 1.

Preferred medium- or high-molecular-weight polyisocyanates are mixtures of polymethylene-polyphenylene-polyisocyanates having an average functionality of 2.6 to 2.8; such products are marketed under various trade names, such as Tedimon® 31 (Montedipe), Suprasec® DNR (ICI) and Desmodur® 44 V20 (Bayer).

Further examples of polyisocyanates which can be used in the process according to the present invention are the isocyanate prepolymers obtained from the reaction of polyisocyanates of formulae (I) and (II) with an understoichiometric amount of polyols, polyethers or polyesters having a hydroxy or amino functionality of at least 2 and an average molecular weight ranging from about 500 to about 8000.

The terminal active hydrogen atoms containing compound is generally composed of at least one polyol or polyether-polyol. Examples of polyols and polyether-polyols are the low-molecucompounds which contain at least two active hydrogen atoms, such as glycols, triols, tetrols, amines, alkanolamines or mixtures thereof. Specific examples thereof are dipropylene glycol, 1,4-butylene glycol, glycerol, trimethylol-propane, pentaerythritol, ethylene-diamine, triethanolamine, etc.

Further examples of polyether-polyols are compounds having a high average molecular weight, e.g., within the range of from about 500 to about 8000, and preferably of from about 3000 to about 6000 and a hydroxy and/or amine functionality of at least 2, obtained from the condensation of mixtures of C₂-C₆ alkylene oxides with starter molecules containing at least two active hydrogen atoms, e.g., those listed hereinabove. Preferred high-molecular-weight polyether-polyols are those which are derived from ethylene oxide and/or propylene oxide.

The catalytic system contained in both the components of the thin skin layer and the components of the system capable of being converted into a cellular foam is preferably constituted by amine catalysts, such as triethylene-diamine, and/or metal-based catalysts, such as tin(II) octanoate.

Besides the above mentioned components, in the compositions of the thin skin layer and of the system capable of being converted into a cellular foam, further additives may be present such as, e.g., stabilizers, pigments, crosslinking agents, cell regulators, etc., the use of which is illustrated and described in the literature (see, e.g, Saunders and Frisch "Polyurethanes, Chemistry and Technology", Interscience, New York 1964).

The following non-limiting examples are to further illustrate the present invention.

### EXAMPLE 1

550 g of a pre-mixed polyurethane system, having the composition given below, were placed in a mould heated at 45°C and mounted on a rotational moulding machine. The mould reproduced a sphere of 22.5 cm of diameter.

| Component A: | |
|---|---|
| - Prepolymer obtained from diphenylmethane diisocyanate (MDI) and polyether-polyol Glendion® 5964 (Montedipe) (NCO = 19.5%; viscosity at 26°C = 400 mPa.s) | 65 parts by weight (pbw) |

| Component B: | |
|---|---|
| - Polyether-polyol having an average molecular weight of 6000, Glendion® 5964 (Montedipe) | 85.5 pbw |
| - Chain extender (monoethylene glycol) | 7.7 pbw |
| - Catalyst DABCO® 33 LV (Air Products) | 0.3 pbw |
| - Zeolite (viscosity of Component B at 25°C: 1,600 mPa.s) | 4.3 pbw |

After charging the mixture (having a temperature of 23°C) to the mould, the rotation of the latter was started. The rotational movements were programmed so as to cause the main rotor and the secondary rotor to rotate at 11 and 15 rpm, respectively.

After 1 minute and 30 seconds, the rotation was discontinued and 5 minutes thereafter the mould was opened.

On the whole surface of the sphere, a layer of skin had been formed, which skin did not show any surface defects.

The skin's thickness was uniform and ranged from 2.4 to 3.3 mm.

### EXAMPLE 2

In order to reduce the thickness of the skin layer, a system of lower viscosity was used.

The composition of the system was as follows:

| Component A: | |
|---|---|
| - Pure MDI, modified with 25% by weight of urethane imine PU ISO 9001 (Montedipe) (NCO = 29.5%; viscosity at 25°C = 75 mPa.s) | 37 pbw |

| Component B: | |
|---|---|
| - Polyether-polyol having an average molecular weight of 6000, Glendion® 5964 (Montedipe) | 90.2 pbw |
| - Chain extender (monoethylene glycol) | 6.3 pbw |
| - Catalyst DABCO® 33 LV (Air Products) | 0.3 pwb |
| - Zeolite | 3.5 pbw |
| - Viscosity depressant (perchloroethylene) (viscosity of Component B at 25°C: 800 mPa.s) | 12.4 pbw |

340 g of material were charged to the mould, and the rotational speeds of the rotors of the mould of example 1 were adjusted at 15 and 30 rpm, respectively. The rotation time was 90 seconds. On the inner surface of the sphere a layer was formed which did not show any surface defects and had an average thickness of 1.5 mm.

### EXAMPLE 3

After coating the sphere with a skin by operating according to the procedure of example 2, the interior thereof was filled with a foamed polyurethane system.

With the mould being sealed, 5 minutes after stopping the rotor 400 g of material having the following composition were introduced:

| Component A: | |
|---|---|
| - Prepolymer obtained from MDI and polyether polyol Glendion® 5964 (Montedipe) (NCO = 28%) | 60.5 pbw |

| Component B: | |
|---|---|
| - Polyether-polyol (m.w. 6000) Glendion® 5964 (Montedipe) | 100.0 pbw |
| - Water | 3.1 pbw |
| - SA Catalyst (dibutyltin dilaurate) | 0.4 pbw |
| - Catalyst DABCO® 33 LV (Air Products) | 1.0 pbw |
| - silicone KS 43 (Bayer) | 3.5 pbw |
| - Algofrene® 11 (Montefluos) | 10.0 pbw |

6 minutes after the introduction of the second reactive material the mould was opened.

The foam had completely filled the inner cavity of the sphere, had a density of 50 g/litre, and adhered to the skin without discontinuities.

## Claims

1. Process for the manufacture of shaped bodies with integrated polyurethane skin, comprising the steps of
(a) charging a closed mould suitable for rotational moulding with a first premixed polymerization-reactive polyurethane system;
(b) causing the mould to rotate, according to the rotational moulding technology, for a period of time sufficient for forming a thin layer of partially polymerized material on the inner surface of said mould; and
(c) discontinuation of the rotation and charging the mould with a polymerization-reactive material which fills the inner mould cavity.

2. Process according to claim 1, in which the thin layer has a thickness of not more than 10 mm, preferably of from 0.3 to 3.5 mm.

3. Process according to any one of claims 1 and 2, in which the rotational speed of the rotor axes on which the mould is mounted ranges from 10 to 50 revolutions per minute.

4. Process according to any one of the preceding claims in which the polymerization-reactive polyurethane system has an initial viscosity of not more than 5,000 mPa.s, preferably of from 50 to 1,000 mPa.s.

5. Process according to any one of the preceding claims, in which the rotation time is from 30 to 300 seconds.

6. Process according to any one of the preceding claims, in which the polymerization-reactive material used to fill the mould cavity is a premixed polymerization-reactive polyurethane system which can be converted into a cellular foam.

7. Process according to claim 6, in which said polyurethane system comprises, as foaming agent, carbon dioxide generated in situ during the polymerization.

8. Shaped bodies with integrated skin, obtainable according to the process of any one of claims 1 to 7.

## Patentansprüche

1. Verfahren zur Herstellung von Formkörpern mit integrierter Polyurethan-Haut, umfassend die folgenden Stufen
(a) Beschicken einer geschlossenen, für das Rotationsgießen geeigneten Form mit einem ersten vorgemischten Polymerisations-reaktiven Polyurethan-System;
(b) Rotierenlassen der Form gemäß der Rotationsgieß-Technologie für eine ausreichende Zeitspanne, um eine dünne Schicht von teilweise polymerisiertem Material auf der inneren Oberfläche der Form zu bilden; und
(c) Beenden der Rotation und Beschicken der Form mit einem Polymerisation-reaktiven Material, das den inneren Formhohlraum füllt.

2. Verfahren nach Anspruch 1, in dem die dünne Schicht eine Dicke von nicht mehr als 10 mm, vorzugsweise 0,3 bis 3,5 mm, aufweist.

3. Verfahren nach irgendeinem der Ansprüche 1 und 2, in welchem die Rotationsgeschwindigkeit der Rotorachsen, auf denen die Form befestigt ist, im Bereich von 10 bis 50 Umdrehungen pro Minute liegt.

4. Verfahren nach irgendeinem der vorangehenden Ansprüche, in welchem das Polymerisations-reaktive Polyurethan-System eine anfängliche Viskosität von nicht mehr als 5000 mPa.s, vorzugsweise von 50 bis 1000 mPa.s, aufweist.

5. Verfahren nach irgendeinem der vorangehenden Ansprüche, in welchem die Rotationszeit 30 bis 300 Sekunden beträgt.

6. Verfahren nach irgendeinem der vorangehenden Ansprüche, in welchem das zum Füllen des Formhohlraumes verwendete Polymerisations-reaktive Material ein vorgemischtes Polymerisations-reaktives Polyurethan-System ist, das in einen Zell-Schaumstoff umgewandelt werden kann.

7. Verfahren nach Anspruch 6, in welchem das Polyurethan-System als Treibmittel Kohlendioxid umfaßt, das während der Polymerisation in situ gebildet wird.

8. Formkörper mit integrierter Haut, erhältlich gemäß dem Verfahren nach irgendeinem der Ansprüche 1 bis 7.

## Revendications

1. Procédé de fabrication de corps mis en forme et comportant une couche externe intégrale de polyuréthane, qui comprend les étapes consistant à :
(a) charger dans un moule fermé, approprié au rotomoulage, une première composition prémélangée pouvant donner du polyuréthane par polymérisation,
(b) faire tourner le moule, suivant la technologie du rotomoulage, pendant un laps de temps suffisant pour former une mince couche de matériau partiellement polymérisé sur la surface intérieure dudit moule, et
(c) arrêter la rotation et charger dans le moule un matériau susceptible de polymériser qui remplit la cavité intérieure du moule.

2. Procédé selon la revendication 1, dans lequel la mince couche a une épaisseur qui n'excède pas 10 mm, en étant de préférence comprise entre 0,3 et 3,5 mm.

3. Procédé selon l'une quelconque des revendications 1 et 2, dans lequel la vitesse de rotation des axes de rotor sur lesquels le moule est monté vaut de 10 à 50 tours par minute.

4. Procédé selon l'une quelconque des précédentes revendications, dans lequel la composition pouvant donner du polyuréthane par polymérisation a une viscosité initiale qui n'excède pas 5000 mPa.s, en étant de préférence comprise entre 50 et 1000 mPa.s.

5. Procédé selon l'une quelconque des précédentes revendications, dans lequel le temps de rotation est compris entre 30 et 300 secondes.

6. Procédé selon l'une quelconque des précédentes revendications, dans lequel le matériau susceptible de polymériser utilisé pour remplir la cavité du moule est une composition prémélangée pouvant donner du polyuréthane par polymérisation qui peut être transformée en une mousse alvéolaire.

7. Procédé selon la revendication 6, dans lequel ladite composition de polyuréthane comprend, en tant qu'agent moussant, du dioxyde de carbone produit in situ pendant la polymérisation.

8. Corps mis en forme et comportant une couche externe intégrale de polyuréthane, qui peut être obtenu grâce au procédé de l'une quelconque des revendications 1 à 7.
